# EUROPÄISCHE PATENTSCHRIFT

(11) **EP 2 736 764 B1**
(45) Veröffentlichungstag und Bekanntmachung des Hinweises auf die Patenterteilung: **24.05.2017**
(21) Anmeldenummer: 12733120.5
(22) Anmeldetag: 06.07.2012
(51) Int. Cl.: B60N 2/68, B60N 2/16

(54) **SITZGESTELL EINES KRAFTFAHRZEUGSITZES MIT ZWEI SEITENTEILEN UND EINEM QUERROHR**
SEAT FRAME OF AN AUTOMOTIVE VEHICLE HAVING TWO SIDE PORTIONS AND A TRANSVERSAL TUBE
BÂTI DE SIÈGE POUR VÉHICULE AUTOMOBILE AVEC DEUX PARTIES LATÉRALES ET UN TUBE TRANSVERSAL

(30) Priorität: 26.07.2011 DE 102011079861
(43) Veröffentlichungstag der Anmeldung: 04.06.2014
(73) Patentinhaber: Johnson Controls Metals and Mechanisms GmbH & Co. KG, 42699 Solingen (DE)
(72) Erfinder: ECKHOFF, Sascha, 42799 Leichlingen (DE); WÖLFEL, Jörg, 42857 Remscheid (DE); KILL, Jürgen, 50737 Köln (DE)
(74) Vertreter: Bauer, Wulf
(86) Internationale Anmeldenummer: PCT/EP2012/063210
(87) Internationale Veröffentlichungsnummer: WO 2013/013955

(56) Entgegenhaltungen:
- DE-U1- 29 909 441
- JP-A- 2002 321 551
- JP-A- 2009 040 286

## Beschreibung

Die Erfindung bezieht sich auf ein Sitzgestell eines Kraftfahrzeugsitzes nach dem Oberbegriff des Anspruchs 1, wie dieses z.B. aus JP 2002 321551 A bekannt ist.

Andere Sitzgestelle mit Seitenteilen und Querrohren sind z.B. aus JP 2009 040286 A und DE 299 09 441 U1 bekannt. Ein weiteres Sitzgestell eines Kraftfahrzeugsitzes ist aus der US 6, 264, 274 B1 der Anmelderin bekannt. Bei dem Querrohr handelt es sich vorzugsweise um ein hinteres Querrohr, das die beiden hinteren Schwingen eines Kraftfahrzeugsitzes verbindet. In einer Alternative handelt es sich um ein vorderes Querrohr, das Vorderschwingen miteinander verbindet. Die Schwingen jeder Sitzseite sind jeweils mit dem Drehrohr drehfest verbunden. Die Schwingen sind über das Drehrohr im jeweiligen Seitenteil schwenkbar gelagert. Die Schwingen sind an ihren jeweils anderen Enden mit einer Sitzschiene eines Schienenpaares für die Längsverstellung gelenkverbunden. Üblicherweise bilden pro Sitzseite eine Vorderschwinge, das Seitenteil, eine hintere Schwinge und die Sitzschiene ein Gelenkparallelogramm. Die Feststellung dieses Parallelogramms erfolgt über ein Arretierelement, z.B. über eine Zahnschwinge, die mit dem Querrohr verbunden ist, und ein mit dieser Zahnschwinge zusammenwirkendes Ritzel. Vorzugsweise ist für beide Sitzseiten nur eine Zahnschwinge vorgesehen, es wird nur eine Sitzseite über die Zahnschwinge arretiert, die andere Sitzseite wird über das Querrohr gehalten, sie hat keine eigene Arretiervorrichtung.

Die Querrohre müssen vorgegebene Festigkeitseigenschaften erfüllen. Sie müssen auch im Falle eines Fahrzeugunfalls, insbesondere eines Crashs, die auftretenden Belastungen aufnehmen. Unter einem Crash wird ein Unfall verstanden, bei dem Sicherheitselemente, beispielsweise Airbags, ausgelöst werden.

Die Querrohre müssen hohe Drehmomente übertragen können. Im Bereich der Verbindung der Schwingen mit dem Querrohr treten hohe Dreh- und Torsionsmomente auf. Im Stand der Technik ist das Querrohr aus entsprechend dickwandigem und gut verformbarem Rohrmaterial hergestellt. Dadurch aber ist das Querrohr relativ schwer. Dies steht im Gegensatz zu der Forderung, ein Kraftfahrzeugsitz mit möglichst wenig Gewicht auszubilden.

Hier setzt nun die Erfindung ein. Sie hat es sich zur Aufgabe gemacht, das Sitzgestell eines Kraftfahrzeugsitzes der eingangs genannten Art zu verbessern, dass insbesondere das Querrohr leichtgewichtiger ausgebildet werden kann. Dies soll unter Beibehaltung der Festigkeit, die ein Querrohrs nach dem Stand der Technik hat, erreicht werden.

Ausgehend von dem Kraftfahrzeugsitz der eingangs genannten Art wird diese Aufgabe gelöst durch die Merkmale des Anspruchs 1.

Die Übertragung der Dreh- und Torsionsmomente im Bereich der Verbindung mit den Schwingen wird durch den Einsatz von hochfestem Material beim Hauptrohr und durch zusätzliche Verstärkung der Rohrenden durch gut verformbares Rohrmaterial der Endstücke erreicht. Das andere Endstück kann selbst einen Lagerbereich ausbilden und sich außerhalb des Hauptrohrs befinden. Das andere Endstück kann in das Hauptrohr endseitig eingesteckt sein, dann bildet das Hauptrohr den Lagerbereich aus. Auch gemischte Lösungen sind möglich.

Vorzugsweise wird für das Hauptrohr ein Stahl mit einer hohen Zugfestigkeit, beispielsweise einer Zugfestigkeit größer als 800 N/mm2 verwendet. Vorzugsweise wird ein Dualphasenstahl für das Hauptrohr verwendet. Vorzugsweise werden Hauptrohr und das jeweilige Endstück durch eine Verformung, insbesondere ein Verprägen, miteinander verbunden. Ein zusätzliches Verschweißen ist möglich. Vorzugsweise werden die Endstücke aus einem Stahl gefertigt, der weniger als 80%, vorzugsweise weniger als 60% der Zugfestigkeit des Hauptrohres aufweist.

Vorzugsweise weist jeder Überlappungsbereich einen schmalen Verformungsbereich und einen breiten Verformungsbereich auf. Der axiale Abstand dieser beiden Verformungsbereiche ist für beide Sitzseiten um mindestens 20%, vorzugsweise mindestens 30% unterschiedlich. Vorzugsweise liegt der schmale Verformungsbereich in größerem Abstand vom benachbarten Rohrende als der breite Verformungsbereich. Vorzugsweise sind beide Verformungsbereiche unrund, beispielsweise sechskantförmig. Andere Polygone oder unrunde Formen sind möglich. Die Verformung findet bevorzugt durch ein Prägen statt.

Vorzugsweise ist jedes Endstück kürzer als 40% der Gesamtlänge des Hauptrohrs. Vorzugsweise weist der Kraftfahrzeugsitz weiterhin eine Torsionsfeder auf, die sich innerhalb des Querrohrs befindet. Ein Endbereich des Querrohrs, insbesondere ein Endstück des Querrohrs, ist vorzugsweise für die Aufnahme einer Torsionsfeder ausgebildet. Er hat hierzu einen Haltebereich, der eine formschlüssige Aufnahme eines Endbereichs der Torsionsfeder ermöglicht.

Die Torsionsfeder dient in bekannter Weise dazu, das zugehörige Schwingenpaar anzuheben und auf diese Weise das Gewicht eines Passagiers zu kompensieren. Auf diese Weise klappt der Kraftfahrzeugsitz nicht zusammen, wenn man die Arretierung des Arretierelements löst.

Das Hauptrohr ist mit den Endstücken form-, kraft- und/oder stoffschlüssig verbunden. Vorzugsweise ist der freie Abstand zwischen den beiden Endstücken größer als 20 %, insbesondere größer als 30 % der axialen Länge des Querrohrs. Vorzugsweise ist zumindest ein Lagerbereich des Querrohres durch das Hauptrohr gebildet.

Weitere Vorteile und Merkmale der Erfindung ergeben sich aus den sonstigen Ansprüchen sowie der nun folgenden Beschreibung eines nicht einschränkend zu verstehenden Ausführungsbeispiels der Erfindung, das im Folgenden unter Bezugnahme auf die Zeichnung näher erläutert wird. In dieser Zeichnung zeigen:
- Fig. 1:: eine perspektivische Ansicht von schräg hinten auf ein Sitzgestell eines Kraftfahrzeugsitzes,
- Fig. 2:: eine perspektivische Ansicht von schräg hinten auf das Sitzgestell nach Figur 1, jedoch nun aus einer anderen Schrägperspektive,
- Fig. 3:: ein perspektivisches Montagebild von schräg vorn eines Querrohrs mit einer Torsionsfeder, einer linken und einer rechten Schwinge und einem Zahnsegment, die Teile sind im bereits verformten Zustand, wie er nach der Montage vorliegt,
- Fig. 4:: eine perspektivische Ansicht von schräg vorn der zu einer Einheit zusammengefügten Bauteile, die in Figur 3 gezeigt sind,
- Fig. 5:: eine perspektivische Ansicht von schräg vorn wie Figur 4, jedoch aus einer anderen Blickrichtung und
- Fig. 6:: einen Axialschnitt entsprechend einer Schnittebene, die durch eine Längsachse des Querrohrs und die Längserstreckung der beiden Schwingen definiert ist.

Das Sitzgestell eines Kraftfahrzeugsitzes hat ein linkes Schienenpaar und ein rechtes Schienenpaar, die jeweils eine Bodenschiene 16 und eine Sitzschiene 18 aufweisen. Die Bodenschiene 16 hat in bekannter Weise Befestigungsmittel (nicht dargestellt) für die Befestigung an einer Bodengruppe eines Kraftfahrzeugs (nicht dargestellt). Mit der linken Sitzschiene 18 ist eine linke Schwinge 20 in einem Gelenk verbunden, mit der rechten Sitzschiene 18 ist eine rechte Schwinge 22 in einem Gelenk verbunden. Beide Schwingen 20, 22 sind mit einem Querrohr 24 starr verbunden. In ihrer Längserstreckung verlaufen die beiden Schwingen 20, 22 parallel zueinander. Das Querrohr 24 hat einen linken Lagerbereich 26 und einen rechten Lagerbereich 28. Der linke Lagerbereich 26 wird von einem linken Seitenteil 30 umgriffen. Ebenso wird der rechte Lagerbereich 28 von einem rechten Seitenteil 32 umgriffen. Hierzu haben die beiden Seitenteile 30, 32 jeweils ein Lager.

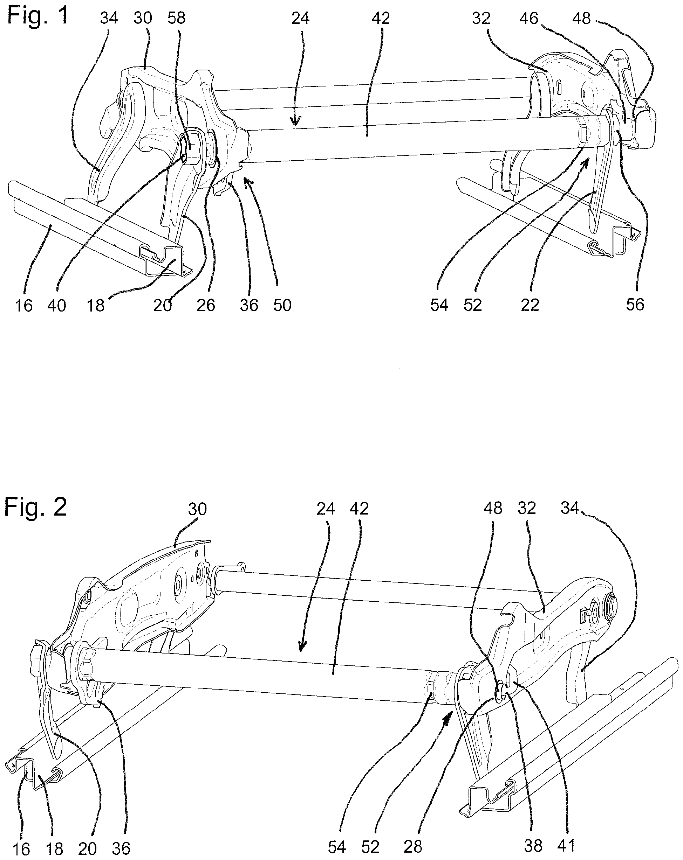

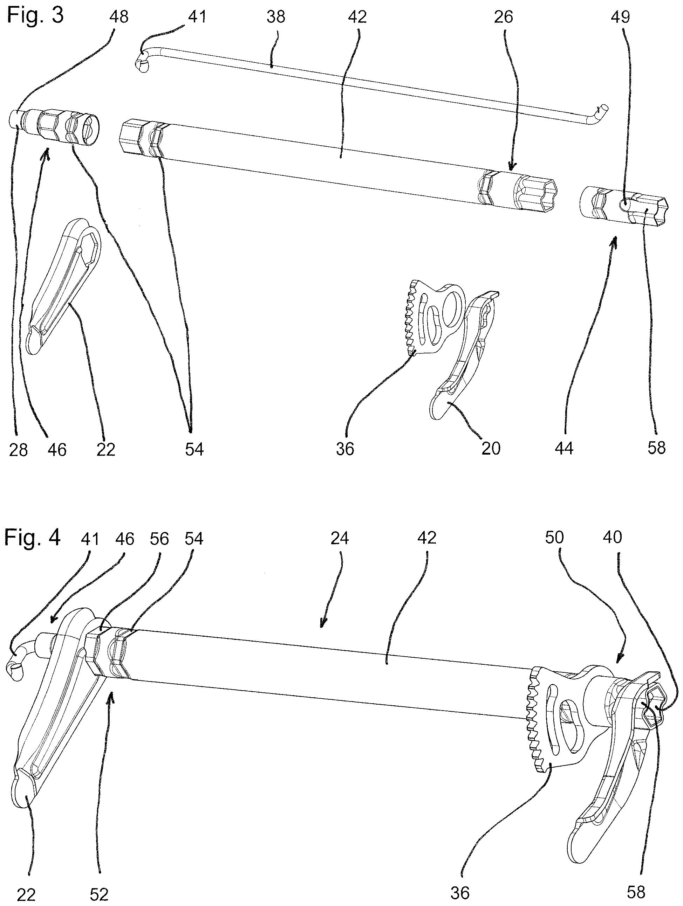

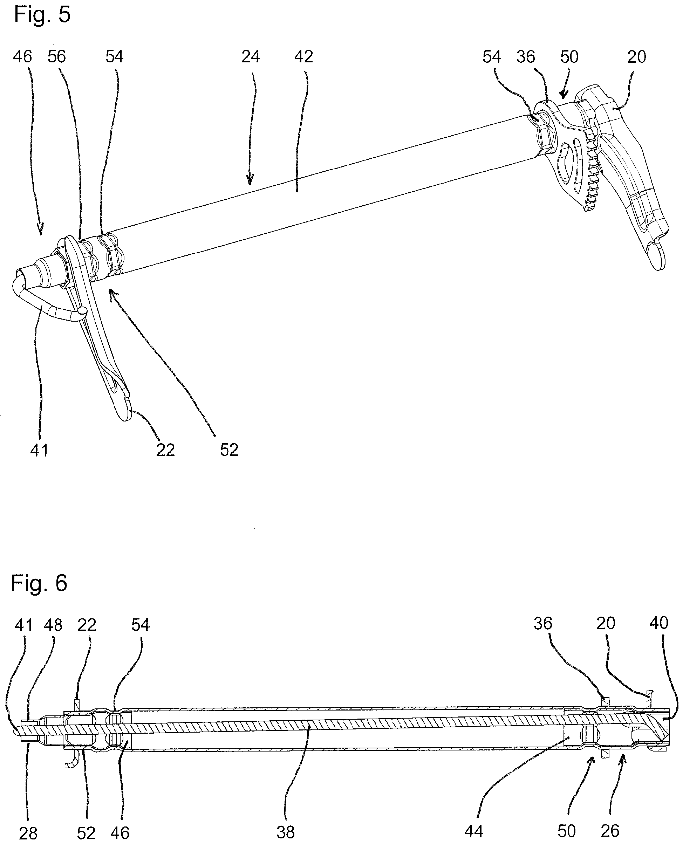

Die Bezeichnung links und rechts ist unter Bezug auf das in Figur 1 eingezeichnete x-y-z-Koordinatensystem zu verstehen. Ausgehend von der positiven x-Richtung, die weitgehend mit einer normalen Fahrtrichtung eines Kraftfahrzeugs übereinstimmt, zeigt die positive y-Richtung nach links. Im konkreten Ausführungsbeispiel ist links die Türseite des Kraftfahrzeugsitzes, rechts ist die Tunnelseite bzw. die Seite, wo der andere Fahrzeugsitz im Kraftfahrzeug vorgesehen ist. In den Fig. 1 und 2 ist die Blickrichtung im Wesentlichen in positiver x-Richtung. In den Fig. 3-6 ist die Blickrichtung dagegen im Wesentlichen in negativer x-Richtung, daher ist nun in den Figuren rechts und links anders als in den Fig. 1 und 2.

An den Seitenteilen 30, 32 ist jeweils noch eine Vorderschwinge 34 angelenkt. Sie hat jeweils einen unteren Gelenkbereich und ist mit diesem in einem unteren Gelenkbereich an der Sitzschiene 18 angelenkt. Am Querrohr 24 ist eine Zahnschwinge 36 drehfest angeordnet. Sie ist über das Querrohr 24 mit den beiden Schwingen 20, 22 starr verbunden.

Eine Torsionsfeder 38 ist vorgesehen, sie befindet sich im Wesentlichen innerhalb des Querrohrs 24, sie ist in bekannter Weise am türseitigen, linken Endbereich des Querrohrs 24 in einem Haltebereich 40 drehfest festgelegt und ragt am tunnelseitigen, rechten Ende des Querrohrs axial aus diesem heraus, dort hat die Torsionsfeder einen Hakenbereich 41, der sich am rechten Seitenteil 32 abstützt.

Das bisher beschriebene Sitzgestell entspricht dem Stand der Technik.

Im Unterschied zum Stand der Technik sind das Querrohr 24, der Haltebereich und die Verbindung des Querrohrs 24 mit den beiden Schwingen 20, 22 sowie mit dem Zahnsegment 36 ausgebildet.

Das Querrohr 24 ist im Wesentlichen aus drei Bauteilen zusammengesetzt, nämlich aus einem Hauptrohr 42, einem linken Endstück 44 und einem rechten Endstück 46.

Bevor diese Teile zusammengefügt werden, ist das Hauptrohr 42 ein runder Rohrabschnitt, der geschweißt oder nahtlos ist. Hergestellt ist der Rohrabschnitt aus einem hochfestem Stahlmaterial, beispielsweise einem Dualphasenstahl, beispielsweise mit einer Streckgrenze größer 800 N/mm2. Bei seiner Herstellung wird aus einem ursprünglich einen größeren Durchmesser aufweisenden Ausgangsrohr durch einen Verformungsschritt, beispielsweise durch einen Rollvorgang, ein Rohling mit geringerem Durchmesser erstellt. Durch die Verformung tritt eine Kaltverfestigung und signifikante Festigkeitssteigerung auf. Beispielsweise hat das Rohr ursprünglich einen Durchmesser von 22 mm und wird auf 20 mm reduziert. Die Reduzierung ist um 5 bis 20 % des Durchmessers.

Das linke Endstück 44 ist ursprünglich ebenfalls ein normaler Rohrabschnitt eines runden Rohres. Die Wandstärke liegt bei 30 bis 70% der Wandstärke des Hauptrohres 42. Das linke Endstück 46 erhält vor dem Zusammenbau zwei etwa daumenförmige Einprägungen 49, die einander 180° gegenüberliegen.

Das rechte Endstück 46 ist ebenfalls ursprünglich ein normaler Rohrabschnitt eines runden Rohres. Die Wandstärke liegt bei 30 bis 70% der Wandstärke des Hauptrohres 42. Das rechte Endstück 46 wird zunächst verformt, es wird an einem freien Ende ein Zylinderbereich 48 mit deutlich kleinerem Durchmesser, beispielsweise 30 bis 50% des Durchmessers des Ausgangsrohrstücks ausgeformt. Bei diesem Verformungsschritt entsteht ein Zwischenbereich, der ebenfalls zylindrisch ist. An ihm finden keine Befestigungen oder Lagerungen statt. Das linke Endstück 44 und das rechte Endstück 46 sind etwa gleichlang, die Abweichung beträgt maximal 25%, insbesondere maximal 5%. Die Rohrabschnitte des linken Endstück 44 und des rechten Endstück 46 weisen einen gleichen Außendurchmesser auf, der dem Innendurchmesser des Hauptrohrs 42 angepasst ist.

Die so beschriebenen drei Teile werden nun zusammengesetzt. Dabei wird das linke Endstück 44 bündig in das linke Ende des Hauptrohrs 42 eingefügt. Dadurch schaut es nicht über das linke Ende des Hauptrohrs 42 hinaus. Es wird ein linker Überlappungsbereich 50 gebildet, der eine der Länge des rechten Endstücks 46 entsprechende Länge hat. Das rechte Endstück 46 wird dagegen nur soweit in den rechten Endbereich des Hauptrohrs 42 eingeschoben, dass der Zylinderbereich 48 noch frei vorsteht. Dieses Endstück 46 schaut also aus dem Hauptrohr 42 heraus. Es wird ein rechter Überlappungsbereich 52 gebildet, der etwa 25 bis 40 % der Länge des rechten Endstücks 46 hat.

Die Endstücke 44, 46 passen mit geringem Spiel in das Hauptrohr 42 hinein. Das rechte Endstück hat eine Wanddicke, die vorzugsweise der Wanddicke des linken Endstücks 44 entspricht. Die Abweichung kann ± 20% sein. Mindestens eines der beiden Endstücke 44, 46 hat eine Wanddicke, die kleiner ist als die Wanddicke des Hauptrohrs 42. Vorzugsweises liegt die Wanddicke der beiden Endstücke 44, 46 bei 50 bis 80 % der Wanddicke des Hauptrohrs 42.

Die beiden Endstücke 44, 46 sind aus einer Stahlqualität gefertigt, die eine geringere Festigkeit aufweist als das Material des Hauptrohrs 42. Es wird ein verformbares Material verwendet, das eine mindestens 10%, vorzugsweise mindestens 25% und insbesondere mindestens 40% kleinere Streckgrenze als das Material des Hauptrohrs 42 hat.

Die oben beschriebenen drei Bauteile werden nun einem Verformungsschritt unterzogen. Dabei findet vorzugsweise ein Prägen statt. Es wird in beiden Überlappungsbereichen 50, 52 einerseits eine umlaufende, schmale Verformung 54 ausgeführt. Im Beispiel wird sie als Verprägung und im konkreten Fall als Sechskantverprägung durchgeführt. Die beiden schmalen Verformungen 54 der beiden Seiten sind in ihrer Ausführung übereinstimmend. Weiter außen befindet sich je eine breite Verformung 56. Im Beispiel wird sie als Verprägung und im konkreten Fall als Sechskantverprägung durchgeführt. Diese ist auf beiden Seiten des Querrohrs 24 unterschiedlich. Auf der rechten Sitzseite wird ein Sechskant geprägt. Auf der linken Seite wird ein Sechskant mit zusätzlichen Rillen 58, die oberhalb der daumenförmige Einprägungen 49 liegen, geprägt. Die Rillen 58 liegen 180° einander gegenüber. Die beiden schmalen Verformungen 54 und die beiden breiten Verformungen 56 werden vorzugsweise in einem einzigen Schritt durchgeführt. Alternativ können sie auch in mehreren einzelnen Schritten ausgeführt werden. Die Verformungen 54, 56 führen jeweils zu einer Verformung, also Formänderung sowohl des Hauptrohrs 42 als auch des jeweils betroffenen Endstücks 44 bzw. 46.

Durch die beschriebenen Verformungsschritte sind die drei Bauteile formschlüssig miteinander verbunden. Sie können zusätzlich noch durch einen Schweißvorgang, beispielsweise durch Laserschweißen, stoffschlüssig miteinander verbunden sein.

Die daumenförmige Einprägung 49 im linken Endstück 44 ist zumindest 5%, vorzugsweise mindestens 10% länger als die breite Verformung 56 an der gleichen Seite des Querrohrs 24 und damit auch als die Rille 58. Dadurch erstreckt sie sich über das Ende des Sechskants und damit auch der Rille 58 hinaus, wie insbesondere aus Figur 3 hervorgeht. Die Einprägung 49 bildet eine innere Wulst, an der sich ein abgebogener Schenkel 60 der Torsionsfeder 38 abstützt. Die Tatsache, dass die Einprägung gesehen vom Rohrende weiter nach innen reicht als der zugehörige Sechskant, den die breite Verformung 56 bildet, ermöglicht es, die Torsionsfeder 38 in einem Zustand zu spannen, in dem sie noch mit ihrem anderen Endbereich, der den Hakenbereich 41 aufweist, etwas Abstand vom rechten Seitenteil 32 hat, so dass der Hakenbereich 41 verdreht und die Torsionsfeder 38 gespannt werden kann. Ist sie im gespannten Zustand, wird sie in das Querrohr 24 hineingeschoben, der Schenkel 60 gleitet dabei an der Innenseite der Einprägung 49 entlang. Die Torsionsfeder 38 wird soweit eingeschoben, bis ein freies Ende des Hakenbereichs 41 durch eine Öffnung im rechten Seitenteil 32 greift und nach innen aus dieser herausschaut, wie aus Figur 1 ersichtlich ist.

Das fertiggestellte Querrohr 24 wird nun mit den anderen Teilen verbunden. Die rechte Schwinge 22 wird mit ihrer Sechskantaufnahme auf die breite Verformung 56 aufgeschoben. Das Zahnsegment wird auf den linken Endbereich des Querrohrs 24 aufgeschoben und in einer Position fixiert, in der es unmittelbar an den Bereich der dortigen schmalen Verformung 54 angrenzt. Ein Teilstück des linken Endbereichs des Querrohrs 24, das sich zwischen der Zahnschwinge und dem breiten Verformungsbereich 56 dieser Seite befindet, bildet den linken Lagerbereich 56. Es wird das linke Seitenteil 30 angebracht, der linke Lagerbereich 56 wird dabei von einem Lager im linken Seitenteil 30 aufgenommen. Außerhalb dieses linken Seitenteils wird auf die breite Verformung 56 die linke Schwinge 20 aufgesteckt, sie hat eine dem Querschnitt dieser breiten Verformung 56 angepasste Ausnehmung, sie wird mit dem Bereich der breiten Verformung 56 verbunden, insbesondere verschweißt. Der Zylinderbereich 48 bildet den rechten Lagerbereich 28, er wird in das rechte Lager, das sich im rechten Seitenteil 32 befindet, gesteckt.

Wie insbesondere die Figuren 1 und 2 zeigen, befindet sich ein Seitenteil, im konkreten Fall das linke Seitenteil 30, zwischen den beiden Schwingen 20, 22, das andere Seitenteil, in diesem Fall das rechte Seitenteil 32, befindet sich außerhalb der beiden Schwingen 20, 22.

Wie insbesondere aus Figur 3 ersichtlich ist, ist auf der linken Seite der Abstand zwischen der schmalen Verformung 54 und der breiten Verformung 56 größer als dies für die rechte Seite der Fall ist. Der Unterschied beträgt mindestens 50%, vorzugsweise mindestens 100%. Dementsprechend ist der linke Überlappungsbereich 50 auch entsprechend länger als der rechte Überlappungsbereich 52. Der Unterschied beträgt mindestens 10%, vorzugsweise mindestens 20%. Die axiale Länge des linken Endstücks 44 beträgt etwa 18% der Länge des Hauptrohrs 42. Dieses Maß kann um ± 50% abweichen. Die axiale Länge der beiden Endstücke 44, 46 ist vor dem Zusammenbau etwa gleich, dies kann um ± 20% abweichen.

Das Sitzgestell hat eine linke und eine rechte Schwinge 20, 22, ein linkes und ein rechtes Seitenteil 30, 32 und ein Querrohr 24, das die beiden Seitenteile 30, 32 verbindet. Die Schwingen 20, 22 sind mit dem Querrohr 24 drehfest verbunden. Das Querrohr 24 weist ein Hauptrohr 42, das sich zwischen den Seitenteilen 30, 32 befindet, ein dem linken Seitenteil 30 zugeordnetes linkes Endstück 44 und ein dem rechten Seitenteil 32 zugeordnetes rechtes Endstück 46 auf. Das Hauptrohr 42 ist mit beiden Endstücken 44, 46 in je einem Überlappungsbereich 50, 52 verbunden. Das Hauptrohr 42 ist aus einem Material, vorzugsweise aus Stahl, gefertigt ist, das eine um mindestens 20 % höhere Zugfestigkeit hat als das Material der Endstücke 44, 46.

## Patentansprüche

1. Sitzgestell eines Kraftfahrzeugsitzes mit einer linken und einer rechten Schwinge (20, 22), mit einem linken und einem rechten Seitenteil (30, 32), die jeweils ein Lager aufweisen, und mit einem Querrohr (24), das die beiden Seitenteile (30, 32) verbindet und einen linken Lagerbereich (26) und einen rechten Lagerbereich (28) aufweist, wobei der linke Lagerbereich (26) im linken Lager und der rechte Lagerbereich (28) im rechten Lager gelagert sind und beide Schwingen (20, 22) mit dem Querrohr (24) drehfest verbunden sind, wobei das Querrohr (24) aus einem Hauptrohr (42), das sich zwischen den Seitenteilen (30, 32) befindet, aus einem dem linken Seitenteil (30) zugeordneten linken Endstück (44) und aus einem dem rechten Seitenteil (32) zugeordneten rechten Endstück (46) zusammengesetzt ist, das Hauptrohr (42) mit dem linken Endstück (46) in einem linken Überlappungsbereich (50) verbunden ist, und das Hauptrohr (42) mit dem rechten Endstück (46) in einem rechten Überlappungsbereich (52) verbunden ist, **dadurch gekennzeichnet, dass** das Hauptrohr (42) aus einem Material, vorzugsweise aus Stahl, gefertigt ist, das eine um mindestens 20 % höhere Zugfestigkeit hat als das Material der Endstücke (44, 46), dass sich mindestens eine der Schwingen (20, 22) zwischen den beiden Seitenteilen (30, 32) befindet, und dass zwischen dieser Schwinge und dem benachbarten Seitenteil das Querrohr (24) durch das Endstück und durch das Hauptrohr (42) gebildet ist.

2. Sitzgestell nach Anspruch 1, **dadurch gekennzeichnet, dass** der linke Lagerbereich (26) und der rechte Lagerbereich (28) durch das Hauptrohr (42) ausgebildet sind, und dass sich das Hauptrohr (42) zumindest zwischen dem linken Lager und dem rechten Lager erstreckt.

3. Sitzgestell nach einem der vorangegangenen Ansprüche, **dadurch gekennzeichnet, dass** jedes Endstück (44, 46) kürzer als 30 %, vorzugsweise kürzer als 20 % der Gesamtlänge des Hauptrohrs (42) ist.

4. Sitzgestell nach einem der vorangegangenen Ansprüche, **dadurch gekennzeichnet, dass** das Hauptrohr (42) eine Zugfestigkeit von mindestens 800 N/mm2 hat.

5. Sitzgestell nach einem der vorangegangenen Ansprüche, **dadurch gekennzeichnet, dass** es weiterhin eine Torsionsfeder (38) aufweist, und dass in einem Endstück eine Aufnahme für die Torsionsfeder (38) ausgebildet ist.

6. Sitzgestell nach einem der vorangegangenen Ansprüche, **dadurch gekennzeichnet, dass** in mindestens einem der beiden Überlappungsbereiche (50, 52) das Endstück sich innerhalb des Hauptrohrs (42) befindet.

7. Sitzgestell nach einem der vorangegangenen Ansprüche, **dadurch gekennzeichnet, dass** es weiterhin eine Zahnschwinge (36) aufweist, die am Querrohr (24) drehfest angeordnet ist.

8. Sitzgestell nach einem der vorangegangenen Ansprüche, **dadurch gekennzeichnet, dass** ein Überlappungsbereich (50, 52) eine umlaufende, schmale Verformung (54) und/oder eine breite Verformung (56) aufweist, und dass die Verformungen (54, 56) jeweils Formänderungen sowohl des Hauptrohrs (42) als auch des jeweils betroffenen Endstücks (44, 46) sind.

9. Sitzgestell nach einem der Ansprüche 1 und 3-8, **dadurch gekennzeichnet, dass** mindestens ein Endstück (44, 46) einen Lagerbereich (26, 28) aufweist.

## Claims

1. A seat frame of a motor vehicle seat with a left and a right rocker (20, 22), with a left and a right side part (30, 32), each of which has a bearing, and with a cross tube (24) connecting the two side parts (30, 32) and having a left bearing region (26) and a right bearing region (28), the left bearing region (26) being supported in the left bearing and the right bearing region (28) in the right bearing, and both rockers (20, 22) being non-rotatably connected to the cross tube (24), wherein the cross tube (24) is composed of a main tube (42) located between the side parts (30, 32), a left end portion (44) associated with the left side part (30) and a right end portion (46) associated with the right side part (32), the main tube (42) is connected to the left end portion (46) in a left overlapping region (50), and the main tube (42) is connected to the right end portion (46) in a right overlapping region (52), **characterized in that** the main tube (42) is manufactured from a material, preferably steel, which has a tensile strength that is greater by at least 20 % than the material of the end portions (44, 46), that at least one of the rockers (20, 22) is located between the two side parts (30, 32) and that, between this rocker and the adjacent side part, the cross tube (24) is formed by the end portion and the main tube (42).

2. The seat frame according to claim 1, **characterized in that** the left bearing region (26) and the right bearing region (28) are formed by the main tube (42), and that the main tube (42) extends at least between the left bearing and the right bearing.

3. The seat frame according to any one of the preceding claims, **characterized in that** each end portion (44, 46) is shorter than 30%, preferably shorter than 20 % of the total length of the main tube (42).

4. The seat frame according to any one of the preceding claims, **characterized in that** the main tube (42) has a tensile strength of at least 800 N/mm2.

5. The seat frame according to any one of the preceding claims, **characterized in that** it further comprises a torsion spring (38) and that an accommodating portion for the torsion spring (38) is formed in an end portion.

6. The seat frame according to any one of the preceding claims, **characterized in that** in at least one of the two overlapping regions (50, 52), the end portion is located within the main tube (42).

7. The seat frame according to any one of the preceding claims, **characterized in that** it further comprises a toothed rocker (36) that is non-rotatably disposed on the cross tube (24).

8. The seat frame according to any one of the preceding claims, **characterized in that** an overlapping region (50, 52) comprises a peripheral narrow deformation (54) and/or a broad deformation (56), and that the deformations (54, 56) are each changes of the shape both of the main tube (42) and of the respective end portion (44, 46).

9. The seat frame according to any one of the claims 1 and 3 - 8, **characterized in that** at least one end portion (44, 46) comprises a bearing region (26, 28).

## Revendications

1. Châssis de siège d'un siège de véhicule automobile comprenant un bras oscillant gauche et un bras oscillant droit (20, 22), une partie latérale gauche et une partie latérale droite (30, 32) qui présentent chacune un palier, ainsi qu'un tube transversal (24) qui relie les deux parties latérales (30, 32) et qui présente une zone gauche à loger (26) et une zone droite à loger (28), la zone gauche à loger (26) étant logée dans le palier gauche et la zone droite à loger (28) étant logée dans le palier droit, et les deux bras oscillants (20, 22) étant reliés au tube transversal (24) de manière à être immobilisés en rotation, dans lequel ledit tube transversal (24) est composé d'un tube principal (42) qui se trouve entre les parties latérales (30, 32), d'une pièce d'extrémité gauche (44) qui est associée à la partie latérale gauche (30) et d'une pièce d'extrémité droite (46) qui est associée à la partie latérale droite (32), le tube principal (42) est relié à ladite pièce d'extrémité gauche (46) dans une zone gauche de recouvrement (50) et le tube principal (42) est relié à ladite pièce d'extrémité droite (46) dans une zone droite de recouvrement (52), **caractérisé par le fait que** le tube principal (42) est réalisé à partir d'un matériau, de préférence d'acier, qui présente une résistance à la traction supérieure d'au moins 20 % à celle du matériau des pièces d'extrémité (44, 46), qu'au moins un des bras oscillants (20, 22) est situé entre les deux parties latérales (30, 32) et que, entre ce bras oscillant et la partie latérale voisine, le tube transversal (24) est constitué par la pièce d'extrémité et par le tube principal (42).

2. Châssis de siège selon la revendication 1, **caractérisé par le fait que** la zone gauche à loger (26) et la zone droite à loger (28) sont formées par le tube principal (42) et que le tube principal (42) s'étend au moins entre le palier gauche et le palier droit.

3. Châssis de siège selon l'une quelconque des revendications précédentes, **caractérisé par le fait que** chaque pièce d'extrémité (44, 46) est plus courte que 30 %, de préférence plus courte que 20 % de la longueur totale du tube principal (42).

4. Châssis de siège selon l'une quelconque des revendications précédentes, **caractérisé par le fait que** le tube principal (42) présente une résistance à la traction d'au moins 800 N/mm².

5. Châssis de siège selon l'une quelconque des revendications précédentes, **caractérisé par le fait que**, en outre, il présente un ressort à torsion (38) et qu'un logement pour le ressort à torsion (38) est ménagé dans une pièce d'extrémité.

6. Châssis de siège selon l'une quelconque des revendications précédentes, **caractérisé par le fait que** dans l'une au moins des deux zones de recouvrement (50, 52) la pièce d'extrémité se trouve à l'intérieur du tube principal (42).

7. Châssis de siège selon l'une quelconque des revendications précédentes, **caractérisé par le fait que**, en outre, il présente un bras oscillant denté (36) qui est disposé sur le tube transversal (24) de manière à être immobilisé en rotation.

8. Châssis de siège selon l'une quelconque des revendications précédentes, **caractérisé par le fait qu'**une zone de recouvrement (50, 52) présente une déformation étroite périphérique (54) et/ou une déformation large (56) et que lesdites déformations (54, 56) sont chacune des changements de forme aussi bien du tube principal (42) que de la pièce d'extrémité (44, 46) respectivement concernée.

9. Châssis de siège selon l'une quelconque des revendications 1 et 3 à 8, **caractérisé par le fait qu'**une pièce d'extrémité (44, 46) au moins présente une zone à loger (26, 28).
